# EUROPEAN PATENT APPLICATION

(11) **EP 2 985 703 A1**
(43) Date of publication of application: **17.02.2016**
(21) Application number: 14200491.0
(22) Date of filing: 29.12.2014
(51) Int. Cl.: G06F 17/30

(54) **Information recommendation method and device**

(30) Priority: 11.08.2014 CN 201410392110
(71) Applicant: Baidu Online Network Technology (Beijing) Co., Ltd, Beijing 100085 (CN)
(72) Inventor: Huang,, Jizhou, Haidian District (CN); Jing,, Kun, Haidian District (CN); Li,, Yangyang, Haidian District (CN); Wan,, Lu, Haidian District (CN)
(74) Representative: Potter Clarkson LLP

(57) **Abstract**

The present invention relates to a method and apparatus for recommending information, wherein the method for recommending information comprises: S1, acquiring information of interest to a user; S2, sending the information to a search engine, so that the search engine monitors the information and returns update information about same when monitoring that the information has changed; and S3, receiving and displaying the update information, and sending reminding information to the user to remind the user to check the update information. By acquiring information of interest to a user, and acquiring update information when it is monitored by a search engine that the information has changed, and sending reminding information to the user to remind the user to check the update information, the method and apparatus for recommending information of the embodiments of the present invention enable the user to acquire information of interest thereto rapidly and accurately, improve the efficiency of information acquisition, and are more tailored to the personalized requirements of the user, and better guide the user to make a decision, thus improving the search experience of the user.

## Description

### Technical field

The present invention relates to the technical field of computer networks, and in particular to a method and apparatus for recommending information.

### Background art

With the continuous development of Internet technology, the search engine has become an essential part of people's lives, and people can use the search engine to inquire about and acquire various types of information and resources. Currently, on the homepage of a search engine, information, e.g. hot news and popular activities, will generally be recommended to a user, so as to guide the search intentions of the user.

However, during the implementation of the present invention, the inventor has found that at least the following problems exist in the prior art: all the information recommended to the user is unified information, which lacks personalized information recommendations; some recommended information may not be what the user desires, and repeatedly recommending will bore the user; and the personalized requirements of the user cannot be satisfied, resulting in a poor search experience for the user.

### Contents of the invention

The present invention is intended to solve one of the technical problems in the related art at least to some extent. For this purpose, a first object of the present invention is to propose a method for recommending information. The method enables a user to acquire information of interest thereto rapidly and accurately, improves the efficiency of information acquisition, and is more tailored to the personalized requirements of the user, and better guides the user to make a decision, thus improving the search experience of the user.

A second object of the present invention is to propose an apparatus for recommending information.

In order to achieve the above-mentioned objects, a method for recommending information is proposed according to a first aspect embodiment of the present invention, which comprises: S1, acquiring information of interest to a user; S2, sending the information to a search engine, so that the search engine monitors the information, and returns update information about same when monitoring that the information has changed; and S3, receiving and displaying the update information, and sending reminding information to the user to remind the user to check the update information.

By acquiring information of interest to a user, and acquiring update information when it is monitored by a search engine that the information has changed, and sending reminding information to the user to remind the user to check the update information, the method for recommending information of the embodiments of the present invention enables the user to acquire information of interest thereto rapidly and accurately, improves the efficiency of information acquisition, and is more tailored to the personalized requirements of the user, and better guides the user to make a decision, thus improving the search experience of the user.

In order to achieve the above-mentioned objects, an apparatus for recommending information is proposed according to a second aspect embodiment of the present invention, comprising: an acquisition module for acquiring information of interest to a user; a sending module for sending the information to a search engine, so that the search engine monitors the information, and returns update information about same when monitoring that the information has changed; and a display module, for receiving and displaying the update information, and sending reminding information to the user to remind the user to check the update information.

By acquiring information of interest to a user, and acquiring update information when it is monitored by a search engine that the information has changed, and sending reminding information to the user to remind the user to check the update information, the apparatus for recommending information of the embodiments of the present invention enables the user to acquire information of interest thereto rapidly and accurately, improves the efficiency of information acquisition, and is more tailored to the personalized requirements of the user, and better guides the user to make a decision, thus improving the search experience of the user.

The additional aspects and advantages of the present invention will be provided in part in the description below, and will be apparent in part from the description below, or be understood by means of putting the present invention into practice.

### Description of the accompanying drawings

Fig. 1 is a flowchart of a method for recommending information according to an embodiment of the present invention.
Fig. 2 is a flowchart of a method for recommending information according to a specific embodiment of the present invention.
Fig. 3 is a schematic diagram I showing the effect of displaying information of interest to a user and information relevant thereto according to a specific embodiment of the present invention.
Fig. 4 is a schematic diagram II showing the effect of displaying information of interest to a user and information relevant thereto according to a specific embodiment of the present invention.
Fig. 5 is a schematic diagram III showing the effect of displaying information of interest to a user and information relevant thereto according to a specific embodiment of the present invention.
Fig. 6 is a schematic diagram IV showing the effect of displaying information of interest to a user and information relevant thereto according to a specific embodiment of the present invention.
Fig. 7 is a schematic diagram V showing the effect of displaying information of interest to a user and information relevant thereto according to a specific embodiment of the present invention.
Fig. 8 is a structural schematic diagram of an apparatus for recommending information according to an embodiment of the present invention.

### Detailed description of embodiments

The embodiments of the present invention will be described in detail below, and examples of the embodiments are shown in the accompanying drawings, in which the same or similar reference numerals represent the same or similar units or modules, or units or modules having the same or similar functions throughout. The embodiments described below with reference to the accompanying drawings are exemplary and are intended to explain the present invention, rather than being understood as limitations to the present invention.

The method and apparatus for recommending information of the embodiments of the present invention are described below with reference to the accompanying drawings.

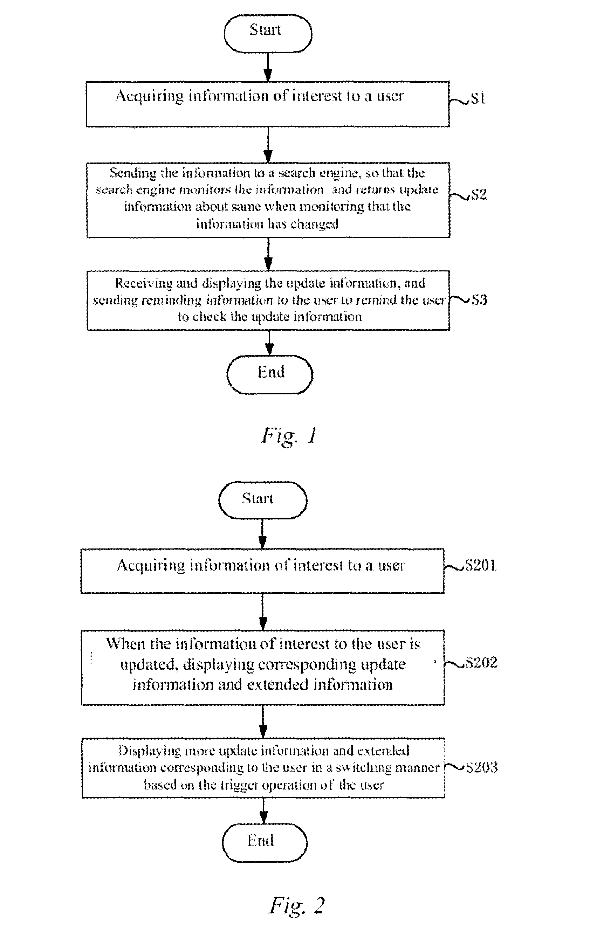

Fig. 1 is a flowchart of a method for recommending information according to an embodiment of the present invention, and the description is carried out from a client side in this embodiment.

As shown in Fig. 1, the method for recommending information comprises:

S1, information of interest to a user is acquired.

Specifically, the client can obtain a historical search behavior of the user under a current account, and then determine the information of interest to the user according to the historical search behavior. In order to recommend information to the user which is more tailored to the personalized requirements thereof, the search engine can respectively record a historical search behavior corresponding to each account in the client. For example: if a user A has ever searched for the teleplay "Obstetrician", then the teleplay "Obstetrician" can be considered as information of interest to user A; and if a user B has ever searched for the teleplay "Swords of Legends", then the teleplay "Swords of Legends" can be considered as information of interest to user B.

The client can also receive customization information input by the user under the current account, and can determine the information of interest to the user according to the customization information. For example: user A can input customization information "Tiny Times" through a personal center, so as to determine that the information of interest to user A is "Tiny Times".

The information of interest to the user can comprise resource information such as audio and video, finance and economics information such as stocks, life service information such as weather forecasts, and various other types of information.

S2, the information is sent to a search engine, so that the search engine monitors the information, and returns update information about same when monitoring that the information has changed.

After the information of interest to the user is acquired, the client can send the information to the search engine. The search engine can monitor the information after receiving same. When it is monitored that the information has changed, update information about same can be returned to the client. For example: if the information of interest to user A is the novel "Great Master", when it is monitored that the novel "Great Master" is updated, update information about the novel "Great Master" can be returned to the client.

S3, the update information is received and displayed, and reminding information is sent to the user to remind the user to check the update information.

After the search engine returns the update information to the client, the client can receive and display the update information, and send reminding information to the user to remind the user to check the update information. Specifically, the reminding information can be sent to a mobile terminal or an application program associated with the current account, and the reminding information can also be displayed on the login page of the current account of the user. For example: when the novel "Great Master", which is of interest to user A, is updated, then a reminding short message "The novel "Great Master" has been updated!" is sent to the mobile phone or an APP (application program) for reading novels of user A, and the reminding information "The novel "Great Master" has been updated!" can also be displayed when user A opens the search engine page and logs in. It should be appreciated that the method of reminding the user is not limited to the method mentioned above. The mobile terminal is not limited to a mobile phone, and can also be an intelligent wearable device, a tablet computer, etc.

In addition, during receiving and displaying of the update information, the client can also receive and display extended information returned by the search engine. The extended information can comprise a search entry of the update information, recommendation information relevant to the information, etc. For example: when the teleplay "Swords of Legends", which is of interest to user B, is updated to the 20th episode, then the client can also display the link address of the 20th episode of the teleplay "Swords of Legends" and relevant recommendation information: "Tiny Times 3", in which Mi Yang also stars.

In addition, when displaying the extended information, the client can also display a switching key, then obtain a trigger operation of the user on the switching key, and display the recommendation information relevant to the information in a switching manner based on the trigger operation. For example: the information of interest to user A also comprises information such as a certain car, stock, etc., then recommendation information relevant to the car, such as price change information and quality problem news, and market information about the stock, can be displayed via the trigger operation of the user on the switching key.

It should be appreciated that the above-mentioned reminding information and relevant recommendation information can remind and recommend truly valuable information for the user. Taking a peccancy inquiry service as an example, by means of the technical solution of the embodiments of the present invention, it can be realized that reminding information is sent to a user only in the case where the user is peccant. If the user is not peccant, no reminding information will be sent to the user. In this way, the user does not need to login to a website for a peccancy inquiry to check if he/she has a peccant behavior, thus providing convenience for the user.

By acquiring information of interest to a user, and acquiring update information when it is monitored by a search engine that the information has changed, and sending reminding information to the user to remind the user to check the update information, the method for recommending information of the embodiments of the present invention enables the user to acquire information of interest thereto rapidly and accurately, improves the efficiency of information acquisition, and is more tailored to the personalized requirements of the user, and better guides the user to make a decision, thus improving the search experience of the user.

Fig. 2 is a flowchart of a method for recommending information according to a specific embodiment of the present invention.

As shown in Fig. 2, the method for recommending information comprises:

S201, information of interest to a user is acquired.

Specifically, the information of interest to the user can be determined according to a historical search behavior of the user, and the user can also set the information of interest thereto in a personal center. For example, "Swords of Legends" and "Obstetrician" can be information that the user has searched before, and can also be set by the user through the personal center.

S202, when the information of interest to the user is updated, corresponding update information and extended information are displayed.

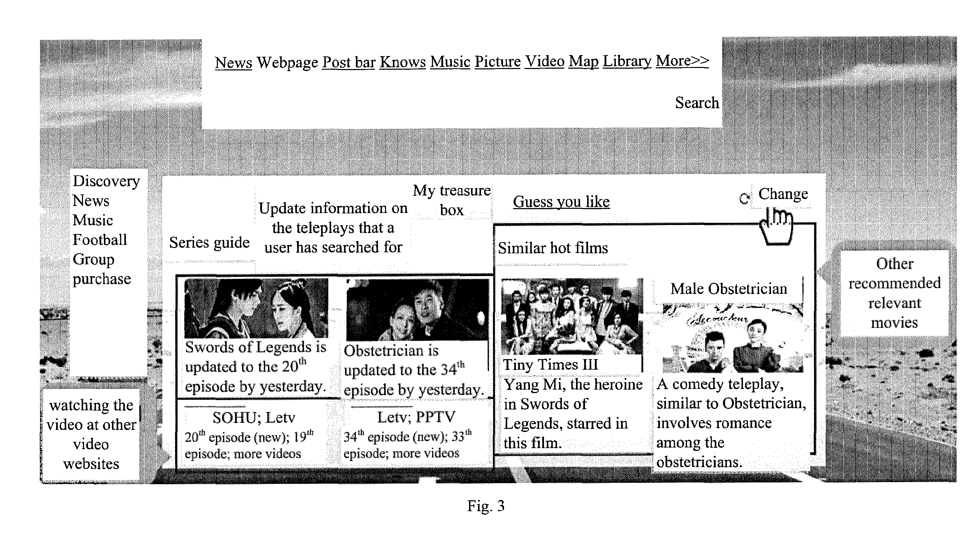

Specifically, as shown in Fig. 3, when the user opens a search engine page and logs in, the update information corresponding to the information of interest to the user can be displayed, for example, "Swords of Legends" is updated to the 20th episode, and "Obstetrician" is updated to the 34th episode, the update time of both being yesterday. Links for watching the video at other video websites can also be displayed, for example, when clicking the "20th episode" below "Sohu", the user can directly enter "Sohu" to watch the 20th episode of "Swords of Legends".

Furthermore, other movies relevant to what is of interest to the user, such as "Tiny Times 3" and "Male Obstetrician", can also be recommended. If the above-mentioned recommendation is not tailored to the requirements of the user, the user can click a "change" button to display other recommended relevant movies. The "change" button is a form of switching button.

S203, more update information and extended information corresponding to the user are displayed in a switching manner based on the trigger operation of the user.

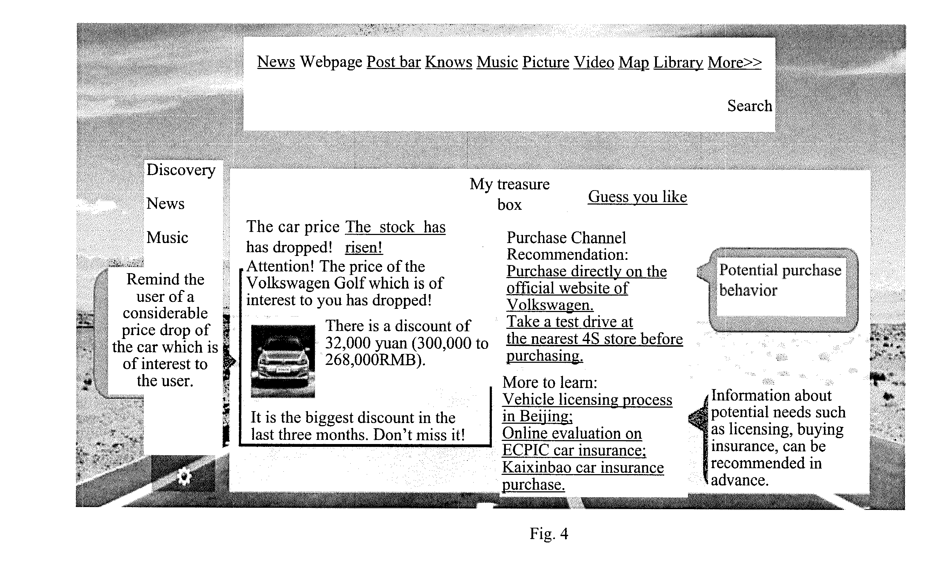

Of course, the information of interest to the user can also comprise information such as cars, stocks, etc. In the case where not all the update information and extended information corresponding to the information of interest to the user can be displayed on the same page, the user can display them in separate pages via the switching button. As shown in Fig. 4, the information of interest to the user is "Volkswagen Golf" and "Baidu stock". Reminding information "Attention! The price of the Volkswagen Golf which is of interest to you has dropped!" and price change information "There is a discount of 32,000 yuan" can be displayed in the page, and possible purchase channels can be recommended to the user, such as: "Purchase directly on the official website of Volkswagen" and "Take a test drive at the nearest 4S store before purchasing". If clicking "Purchase directly on the official website of Volkswagen", then the user can directly enter the official website of Volkswagen to make the purchase; and if clicking "Take a test drive at the nearest 4S store before purchasing", then the user can enter the website of the nearest 4S store to make an appointment for a test drive. Of course, information about potential needs such as licensing, buying insurance, etc. can also be recommended to the user.

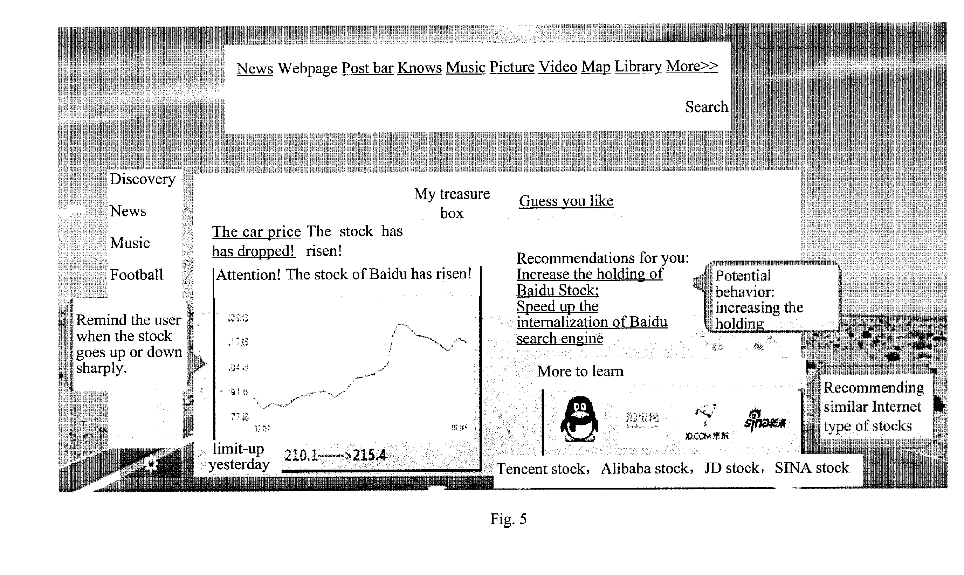

As shown in Fig. 5, the user can click the switching button "The stock has risen" to switch to the page displaying the "stock" information. The reminding information "Attention: the stock of Baidu has risen!", the trend chart of the "Baidu stock", and share price change information of rising from "210.1" to"215.4" can be displayed in the page, and information relevant to "increase the holding of Baidu stock" can be recommended at the same time. Furthermore, the Internet type of stocks, such as Tencent stock, Alibaba stock, JD stock, SINA stock, etc. can also be recommended to the user.

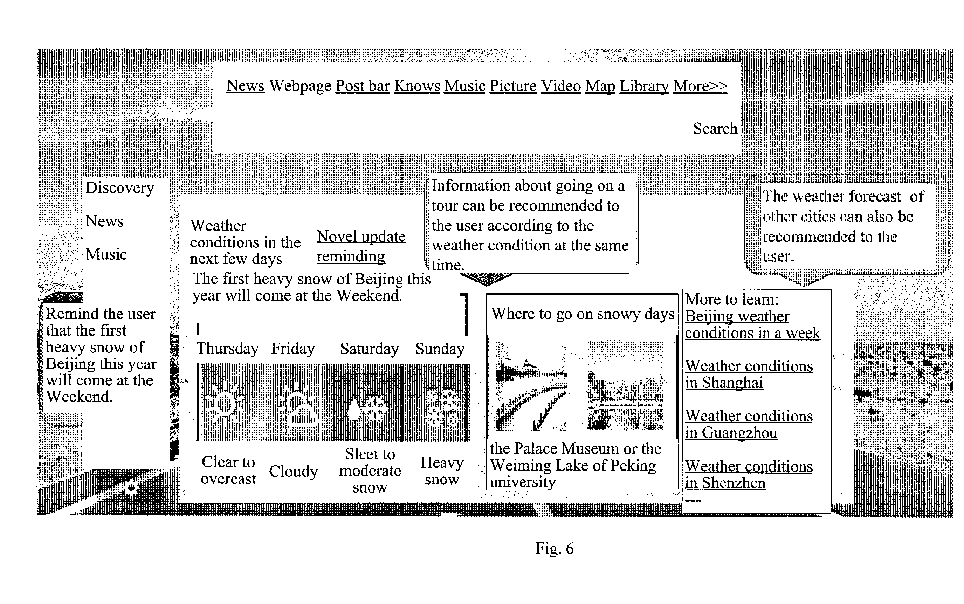

As shown in Fig. 6, the user can click the switching button "My treasure box" to switch to the page of information related to the weather forecast. The reminding information "The first heavy snow of Beijing this year will come at the weekend" and the weather conditions in the next few days can be displayed in the page, and information about going on a tour can be recommended to the user according to the weather condition at the same time, for example: go to the Palace Museum or the Weiming Lake of Peking university on snowy days. Furthermore, the weather forecast of other cities can also be recommended to the user.

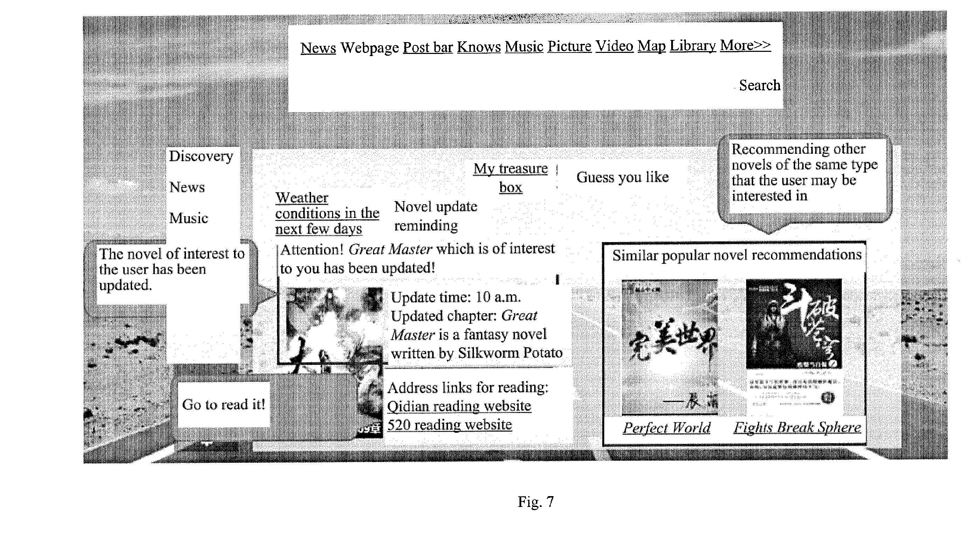

As shown in Fig. 7, the user can click the switching button "Novel update reminding" to switch to the page of the novel of interest to the user. The reminding information "Attention: "Great Master" which is of interest to you has been updated!" can be displayed in the page, and it is displayed that the update time was 10 am today. The address link for reading the updated chapter is recommended to the user at the same time, for example: reading it on the Qidian reading website, and reading it on the 520 reading website, and the user can read the updated chapter of "Great Master" by clicking the above-mentioned links. Furthermore, other novels of the same type, such as "Perfect World" and "Fights Break Sphere", etc., that the user may be interested in can also be recommended to the user.

It should be noted that the above-mentioned information is only displayed when it has changed, and will not be displayed when no change occurs.

By sending reminding information to a user when the information of interest to the user has changed so as to remind the user to check update information and relevant information, the method for recommending information of the embodiments of the present invention recommends information which is to the user tailored to the requirements thereof in a more personalized and intelligentized manner, better guides the user to make a decision, and enables the user to acquire the information of interest thereto rapidly and accurately, and improves the efficiency of information acquisition, thus improving the search experience of the user.

In order to implement the above-mentioned embodiments, the present invention also proposes an apparatus for recommending information.

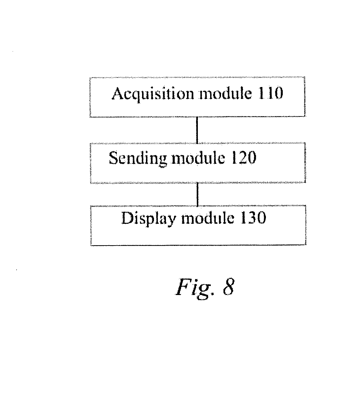

Fig. 8 is a structural diagram of an apparatus for recommending information according to an embodiment of the present invention.

As shown in Fig. 8, the apparatus for recommending information comprises: an acquisition module 110, a sending module 120, and a display module 130.

The acquisition module 110 is used for acquiring information of interest to a user.

Specifically, the acquisition module 110 can obtain a historical search behavior of the user under a current account, and then determine the information of interest to the user according to the historical search behavior. In order to recommend to the user information more tailored to the personalized requirements thereof, the search engine can respectively record a historical search behavior corresponding to each account in the client. For example: if a user A has once searched for the teleplay "Obstetrician", then the teleplay "Obstetrician" can be considered as the information of interest to user A; and if a user B has once searched for the teleplay "Swords of Legends", then the teleplay "Swords of Legends" can be considered as the information of interest to user B.

The acquisition module 110 can also receive customization information input by the user under the current account, and determine the information of interest to the user according to the customization information. For example: user A can input customization information "Tiny Times" through a personal center, so as to determine that the information of interest to user A is "Tiny Times".

The information of interest to the user can comprise resource information such as audio and video, finance and economics information such as stocks, life service information such as weather forecasts, and various other types of information.

The sending module 120 is used for sending the information to a search engine, so that the search engine monitors the information, and returns update information about same when monitoring that the information has changed.

When the information of interest to the user is acquired by the acquisition module 110, the sending module 120 can send the information to the search engine. The search engine can monitor the information after receiving same. When it is monitored that the information has changed, update information about same can be returned to the client. For example: if the information of interest to user A is the novel "Great Master", when it is monitored that the novel "Great Master" is updated, update information about the novel "Great Master" can be returned to the client.

The display module 130 is used for receiving and displaying the update information, and sending reminding information to the user to remind the user to check the update information.

When the search engine returns the update information to the client, the display module 130 can receive and display the update information, and send the reminding information to the user to remind the user to check the update information. Specifically, the display module 130 can send the reminding information to a mobile terminal or an application program associated with the current account, and the reminding information can also be displayed on the login page of the current account of the user. For example: when the novel "Great Master", which is of interest to user A, is updated, then a reminding short message "The novel "Great Master" has been updated!" is sent to the mobile phone or an APP for reading novels of user A, and the reminding information "The novel "Great Master" has been updated!" can also be displayed when user A opens the search engine page and logs in. It should be appreciated that the method for reminding the user is not limited to the method mentioned above. The mobile terminal is not limited to a mobile phone, and can also be an intelligent wearable device, a tablet computer, etc.

In addition, when receiving and displaying the update information, the display module 130 can also receive and display the extended information returned by the search engine. The extended information can comprise a search entry of the update information, recommendation information relevant to the information, etc. For example: when the teleplay "Swords of Legends", which is of interest to user B, is updated to the 20th episode, then the client can also display the link address of the 20th episode of the teleplay "Swords of Legends", and relevant recommendation information: "Tiny Times 3", in which Mi Yang also stars.

In addition, when displaying the extended information, the display module 130 can also display a switching key, then obtain the trigger operation of the user on the switching key, and display the recommendation information relevant to the information in a switching manner based on the trigger operation. For example: the information of interest to user A also comprises information such as a certain car, stock, etc., then recommendation information relevant to the car, such as price change information and quality problem news, and market information about the stock, can be displayed via the trigger operation of the user on the switching key.

By acquiring information of interest to a user, and acquiring update information when it is monitored by a search engine that the information has changed, and sending reminding information to the user to remind the user to check the update information, the apparatus for recommending information of the embodiments of the present invention enables the user to acquire information of interest thereto rapidly and accurately, improves the efficiency of information acquisition, and is more tailored to the personalized requirements of the user, and better guides the user to make a decision, thus improving the search experience of the user.

In the description of the specification, the description to the reference terms such as "one embodiment", "some embodiments", "an example", "a specific example" or "some examples" is intended to mean that a particular feature, structure, material or characteristic described in connection with the embodiment or example is included in at least one embodiment or example of the present invention. In the present specification, the illustrative expression of the above-mentioned terms is not necessarily regarding the same embodiment or example. Furthermore, the described particular feature, structure, material or characteristic may be combined in a suitable manner in any one or more embodiments or examples. In addition, in the case of no mutual contradiction, those skilled in the art may incorporate and combine different embodiments or examples described in the present description with features of different embodiments or examples.

In addition, the terms "first" and "second" are merely for descriptive purposes, rather than being understood to indicate or imply relative importance or implicitly specify the number of technical features indicated. Thus, the features defined by "first" and "second" may explicitly or implicitly comprise at least one of the feature. In the description of the present invention, the meaning of "a plurality of" is at least two, for example, two, three, etc., unless clearly and specifically defined otherwise.

Any process or method description in the flowchart or otherwise described herein may be understood to represent a module, segment or section comprising one or more codes of executable instructions used for implementing a particular logical function or process step, and the scope of the preferred embodiments of the present invention comprises further implementations, where functions may be carried out not according to the order shown or discussed, comprising a basically synchronous manner or an inverse order in accordance with involved functions, and this should be understood by those skilled in the art to which the embodiments of the present invention belong.

A logic and/or step represented in the flowchart or otherwise described herein, for example, may be considered as a sequencing list of executable instructions used for implementing a logical function, may specifically be implemented in any computer readable medium for an instruction execution system, apparatus or device (such as a computer-based system, a system comprising a processor or other systems which may extract an instruction from the instruction execution system, apparatus or device and execute the instruction) to use, or is used in combination with the instruction execution system, apparatus or device. For this description, the "computer readable medium" may be any apparatus which may contain, store, communicate, propagate or transmit a program for an instruction execution system, apparatus or device to use or be used in combination with the instruction execution system, apparatus or device. More specific examples of the computer readable medium (a non-exhaustive list) comprises the following: an electrical connection part (an electronic apparatus) having one or more wirings, a portable computer disk box (a magnetic apparatus), a random access memory (RAM), a read-only memory (ROM), an erasable and programmable read-only memory (an EPROM or flash memory), an optical fiber apparatus, and a portable CD read-only memory (CDROM). In addition, the computer readable medium may even be paper or other appropriate media upon which the program can be printed, because, for example, paper or other media may be subjected to optical scanning, then is processed by means of editing, interpreting or other appropriate means if necessary, to obtain the program in an electronic manner, and then stores same in a computer memory.

It should be understood that various parts of the present invention may be implemented by means of hardware, software, firmware or a combination thereof. In the embodiments above, a plurality of steps or methods may be implemented by means of software or firmware stored in a memory and executed by an appropriate instruction execution system. For example, if implemented by means of hardware, as in another embodiment, it can be implemented by means of any one or a combination of the following techniques commonly known in the art: a discrete logical circuit having a logical gate circuit used for implementing a logical function for a data signal, an application-specific integrated circuit having an appropriate combinational logical gate circuit, a programmable gate array (PGA), a field programmable gate array (FPGA), etc.

Those of ordinary skill in the art shall understand that the implementation of all or a part of the steps carried out in the above-mentioned embodiment methods may be achieved by instructing relevant hardware with a program. The program may be stored in a computer readable storage medium, and when executed, the program comprises one of the steps in the method embodiments or a combination thereof.

In addition, various functional units in various embodiments of the present invention may be integrated into a processing module, or each of the units may exist alone physically, or two or more than two units may be integrated into a module. The above-mentioned integrated module may be implemented in the form of hardware, and may also be implemented in the form of a functional software module. When implemented in the form of a functional software module and sold or used as an independent product, the integrated module may also be stored in a computer readable storage medium.

The above-mentioned storage medium may be a read-only memory, a magnetic disk, or an optical disk, etc. Although the embodiments of the present invention have been shown and described above, it should be understood that the embodiments above are exemplary and shall not be understood as limitations to the present invention. Those of ordinary skill in the art may make changes, modifications, replacements and variations to the embodiments above within the scope of the present invention.

## Claims

1. A method for recommending information, **characterized in that** it comprises:
S1, acquiring information of interest to a user;
S2, sending said information to a search engine, so that said search engine monitors said information, and returns update information about same when monitoring that said information has changed; and
S3, receiving and displaying said update information, and sending reminding information to said user to remind the user to check said update information.

2. The method according to claim 1, **characterized in that** said S1 comprises:
obtaining a historical search behavior of the user under a current account, and determining the information of interest to said user according to said historical search behavior; or
receiving customization information input by the user under the current account, and determining the information of interest to said user according to said customization information.

3. The method according to claim 1, **characterized in that**, during said receiving and displaying of said update information, it further comprises:
receiving and displaying extended information returned by said search engine, with said extended information comprising a search entry of said update information and/or recommendation information relevant to said information.

4. The method according to claim 3, **characterized in that** it further comprises:
displaying a switching key; and
acquiring a trigger operation of the user on said switching key, and displaying said update information and/or the recommendation information relevant to said information in a switching manner based on said trigger operation.

5. The method according to any one of claims 2 to 4, **characterized in that** said sending reminding information to said user comprises:
sending said reminding information to a mobile terminal or an application program associated with the current account; or
displaying said reminding information on a login page of the current account of said user.

6. An apparatus for recommending information, **characterized by** comprising:
an acquisition module for acquiring information of interest to a user;
a sending module for sending said information to a search engine, so that said search engine monitors said information, and returns update information about same when monitoring that said information has changed; and
a display module for receiving and displaying said update information, and sending reminding information to said user to remind the user to check said update information.

7. The apparatus according to claim 6, **characterized in that** said acquisition module is specifically used for:
obtaining a historical search behavior of the user under a current account, and determining the information of interest to said user according to said historical search behavior; or
receiving customization information input by the user under the current account, and determining the information of interest to said user according to said customization information.

8. The apparatus according to claim 6, **characterized in that** said display module is further used for:
during said receiving and displaying of said update information, receiving and displaying extended information returned by said search engine, with said extended information comprising a search entry of said update information and/or recommendation information relevant to said information.

9. The apparatus according to claim 8, **characterized in that** said display module is further used for:
displaying a switching key; and
acquiring a trigger operation by the user on said switching key, and displaying said update information and/or the recommendation information relevant to said information in a switching manner based on said trigger operation.

10. The apparatus according to any one of claims 7 to 9, **characterized in that** said display module is specifically used for:
sending said reminding information to a mobile terminal or an application program associated with the current account; or
displaying said reminding information on a login page of the current account of said user.

11. A computer program configured to perform the method of any preceding method claim.
